(19) Europäisches Patentamt

European Patent Office

Office européen des brevets

(11) Veröffentlichungsnummer: **0 246 335**

**A1**

(12) **EUROPÄISCHE PATENTANMELDUNG**

(21) Anmeldenummer: **86106462.4**

(22) Anmeldetag: **13.05.86**

(51) Int. Cl.⁴: **F04B 9/02** , B05B 9/04 ,
F16H 3/72

(43) Veröffentlichungstag der Anmeldung:
**25.11.87 Patentblatt 87/48**

(84) Benannte Vertragsstaaten:
**AT BE CH DE FR GB IT LI LU NL SE**

(71) Anmelder: **WiWa Wilh. Wagner GmbH & Co.
KG
Gewerbestrasse 1-3
D-6335 Lahnau 1/Waldgirmes(DE)**

(72) Erfinder: **Leinweber, Günter
Schillerstrasse 19
D-6335 Lahnau 1(DE)**

(74) Vertreter: **Missling, Arne, Dipl.-Ing. et al
Patentanwälte Dipl.-Ing. R. Schlee Dipl.-Ing.
A. Missling Bismarckstrasse 43
D-6300 Giessen(DE)**

(54) **Pumpenantrieb.**

㊼ Eine Vorrichtung für einen Antrieb für Pumpen
mit einem konstant anstehenden und vorwählbaren
Betriebsdruck, hat, damit sie mit einem handelsüblichen Elektromotor betrieben werden kann,
der auch bei geschlossener Spritzpistole weiterlaufen kann, ein Differentialgetriebe mit einer Antriebswelle (15) für den Anschluß des Motors und zwei
Abtriebswellen (8) für den Anschluß der Pumpen und
einer einstellbaren Bremsvorrichtung (31)

Fig.1

EP 0 246 335 A1

## Pumpenantrieb

Die Erfindung betrifft eine Vorrichtung für den Antrieb von Pumpen mit einem konstant anstehenden und vorwählbaren Betriebsdruck.

Das luftlose Spritzen von hochviskosen wie niedrigviskosen Materialien hat sich zunehmend durchgesetzt, zumal hier keine oder nur eine äußerst geringe Spritznebelbelästigung eintritt, ein Rückprall der Farbe aus Ecken und Vertiefungen unterbleibt und somit die Umgebung sauber bleibt. Darüberhinaus lassen sich auch hochviskose Materialien einwandfrei und auch mit größeren Schichtstärken verarbeiten. Man erreicht eine einwandfreie Füllung der Poren auf jedem Untergrund und somit eine gute Haftfähigkeit, was die Qualität des Anstrichs verbessert.

Die Arbeitsweise des sogenannten Airless-Spritzverfahrens besteht darin, daß eine Hochdruckpumpe das Spritzgut aus einem beliebigen Behälter ansaugt und es unter hohem hydraulischen Druck über einen Spezialschlauch einer Spritzpistole zuführt. Durch eine speziell geformte Düse wird das Material ohne Luft in feinste Tröpfchen zerstäubt und mit hoher Geschwindigkeit auf das Werkstück aufgebracht. Hierdurch wird erreicht, daß selbst Ecken und Winkel komplizierter Werkstücke ebenso gleichmäßig wie glatte Flächen beschichtet werden.

Ein Problem beim Airless-Spritzverfahren besteht darin, daß auch bei Stillstandszeiten an der Spritzdüse ein hoher Druck anstehen muß, damit sofort weitergespritzt werden kann und dies mit einer gleichbleibenden Qualität. Als Hochdruckpumpen werden überwiegend Kolbenpumpen, und zwar insbesondere Differential-Kolbenpumpen eingesetzt. Als Antriebsmotor kann entweder ein Linear-oder Rotationsmotor eingesetzt werden. Beim Rotationsmotor wird die Drehbewegung des Motors in eine hin und hergehende Bewegung für die Betätigung des Kolbens umgesetzt. Hierzu wird auf die Achse des Antriebsmotors eine Exzenterscheibe aufgesetzt, die über eine Pleuelstange auf die Kolbenstange der Kolbenpumpe einwirkt. In dem oberen und unteren Totpunkt bei der Bewegung der Kolbenstange wird kein Material gefördert, was zu einem schwankenden Spritzbild führt. Diese Schwankungen im Spritzbild machen sich desto stärker bemerkbar, je größer die aus der Düse austretende Materialmenge ist. Dieses - schwankende Spritzbild ist mit bisher bekannten Mitteln nicht zu vermeiden.

Für den Antrieb des Kolbens der Kolbenpumpe dient in erster Linie ein druckluftangetriebener Linearmotor, da dieser es gestattet, den Materialdruck stufenlos einzustellen, wobei die Materialmenge sich von selbst regelt. Der Druckluftmotor arbeitet nur bei geöffneter Spritzpistole, stoppt jedoch nach dem Schließen derselben und läuft sofort nach erneutem Öffnen der Pistole wieder an. Seine Laufgeschwindigkeit richtet sich automatisch nach der durch die Spritzdüse bedingten Abnahmemenge.

Bei Verwendung anderer Antriebsmotoren stellen sich Probleme dadurch ein, daß beim Stillstand der Spritzdruck an der Spritzpistole aufrechterhalten werden muß. Bei Verwendung von Elektromotoren hat man deshalb den Weg beschritten, daß ein Überströmventil eingebaut wird, das die nicht verbrauchte, überschüssige Farbmenge zurückführt. Der Nachteil dieses Systems besteht jedoch darin, daß hierdurch zum einen der Pumpenverschleiß erhöht wird und zum anderen ein dauerhaftes Umwälzen der Farbe erfolgt, was z.B. bei gefüllten Farben nicht zulässig ist. Des weiteren ist es bekannt, einen Hydraulikkreis zwischen den Motor und die Pumpe einzuschalten, was den Nachteil mit sich bringt, daß in den Totpunkten ein sehr hoher Druckabfall eintritt infolge der Trägheit des Hydraulikkreises. Der Druckabfall, der bei einem mechanischen Kreis ca. 5 bis 10 % beträgt, nimmt beim Hydraulikkreis wesentlich höhere Werte an, was die Einsetzbarkeit derartiger Anlagen auf Anwendungszwecke mit geringeren Qualitätsanforderungen beschränkt.

Des weiteren werden seit neuerem auch Gleichstrommotoren für den Antrieb herangezogen, die geregelt werden und es somit gestatten, unter Last anzuhalten und wieder anzufahren. Allerdings ist der regeltechnische Aufwand erheblich, was diesen Antrieb teuer macht, des weiteren ist dieser Antrieb, bedingt durch den oft sehr rauhen Einsatz in Schiffswerften, Baustellen etc., auch störanfällig.

Der Erfindung liegt die Aufgabe zugrunde, eine Vorrichtung für den Antrieb von Pumpen mit einem konstant anstehenden und vorwählbaren Betriebsdruck vorzuschlagen, der es gestattet, einen handelsüblichen Elektromotor, Benzinmotor oder auch Luftmotor einzusetzen, der auch bei geschlossener Spritzpistole weiterlaufen kann, der es gestattet, den Betriebsdruck zwischen einem maximal durch die Pumpe begrenzten Wert und Null stufenlos einzustellen und der darüberhinaus bei seiner Verwendung in Verbindung mit Kolbenpumpen die Druckschwankungen im Spritzstrahl im Vergleich zu bisher bekannten Pumpenanordnungen wesentlich herabzusetzen.

Diese Aufgabe wird mit den Merkmalen des kennzeichnenden Teils des Anspruches 1 gelöst.

Eine erfindungsgemäße Vorrichtung für den Antrieb von Pumpen besitzt somit ein Differentialgetriebe, wobei an der Antriebswelle der Antriebsmotor angekoppelt ist. Dies kann z.B. ein Elektromotor, ein Verbrennungsmotor oder auch ein Luftmotor sein. Dieser Antriebsmotor dreht sich ständig mit einer ganz bestimmten Drehzahl. An den beiden Antriebswellen des Differentialgetriebes ist zum einen die Pumpe und zum anderen eine Bremseinheit angeschlossen, die vorteilhaft aus einer Hydraulikpumpe mit einem Hydraulikkreislauf besteht, in den ein einstellbares Drosselventil eingeschaltet ist. Mit Hilfe der Bremseinheit wird der Druck der Pumpe einreguliert. Wird die Spritzpistole geschlossen und somit kein Material gefördert, so wird der Druck in der Pumpe so hoch, daß die zur Pumpe führende Abtriebswelle des Differentialgetriebes auf Null abgebremst wird. Aufgrund des Ausgleichsgetriebes wird dann nur noch die Abtriebswelle angetrieben, die zur Bremseinheit führt. Der Motor kann so auch bei geschlossener Spritzpistole ohne Schaden zu nehmen weiterlaufen, wobei gleichzeitig an der Pumpe der vorher eingestellte Betriebsdruck beibehalten wird.

Ein weiterer Vorteil einer erfindungsgemäßen Vorrichtung für den Pumpenantrieb besteht darin, daß aufgrund des eingesetzten Differentialgetriebes bei Verwendung einer Kolbenpumpe der Druckabfall in den Totpunkten, d.h. den Umkehrpunkten des Kolbens, lange nicht mehr so hoch ist wie bei bekannten Pumpenantrieben, denn aufgrund des Einsatzes des Differentialgetriebes erhöht sich die Umlaufgeschwindigkeit der Abtriebswelle der Kolbenpumpe gerade in den Totpunkten ganz erheblich gegenüber den Geschwindigkeiten in einem Winkel von 90° hierzu, weil der Widerstand aufgrund der in diesen Bereichen geringeren Fördermenge wesentlich herabgesetzt wird. Die Folge ist, daß sich der Zeitanteil des Druckabfalls im Vergleich zu den Zeiten mit normalem Betriebsdruck prozentual so stark verringert hat, daß sich dieser Druckabfall im Sprühbild nur noch geringfügig bemerkbar macht und dies auch bei hohen Förderleistungen der Pumpe.

Weitere vorteilhafte Ausgestaltungen der Erfindung gehen aus den Unteransprüchen in Verbindung mit Zeichnung und Beschreibung hervor.

Ein Ausführungsbeispiel der Erfindung ist im folgenden anhand der Zeichnung näher beschrieben, in dieser zeigen:

Fig. 1 einen Schnitt durch eine erfindungsgemäß ausgebildete Vorrichtung,

Fig. 2 eine Draufsicht auf Fig.1 in Richtung des Pfeiles X und

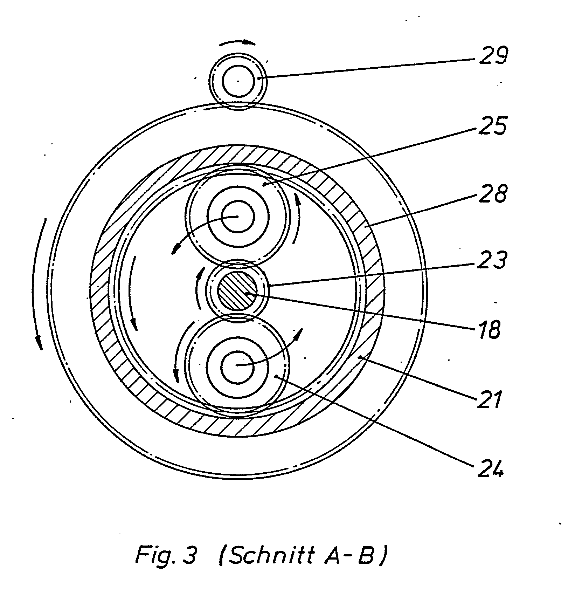

Fig. 3 einen Schnitt nach Linie III-III in Fig. 1.

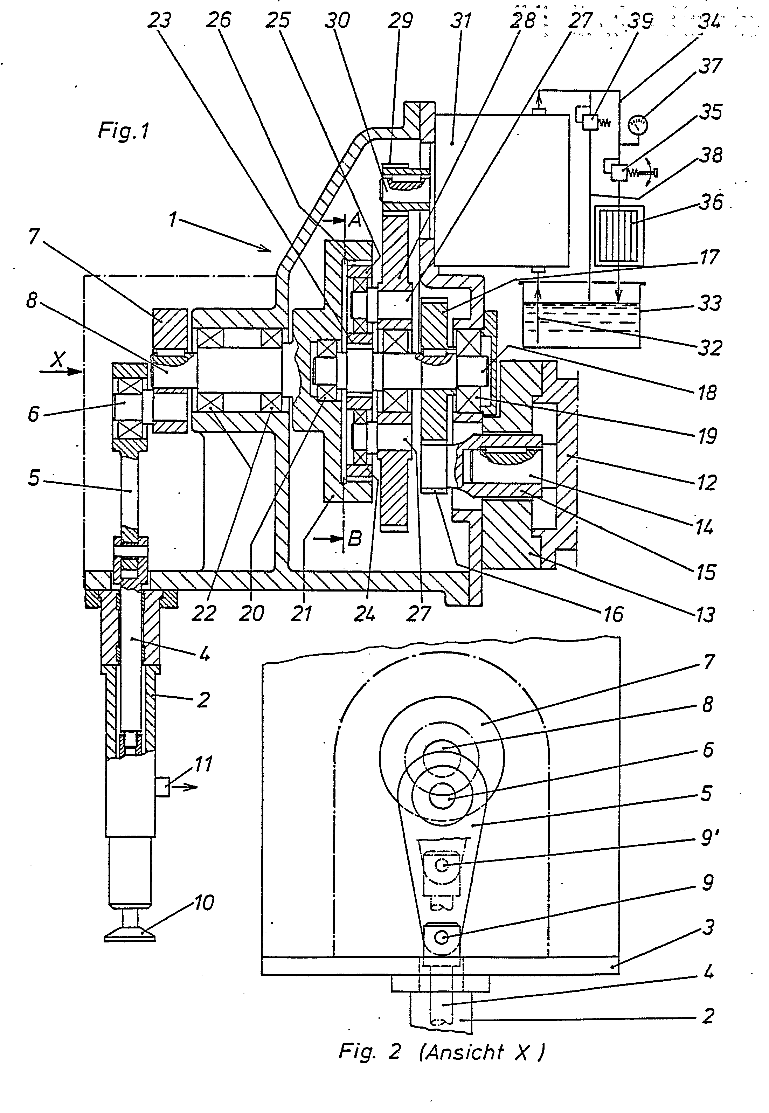

Die in den Figuren dargestellte Antriebsvorrichtung 1 dient zum Antrieb einer Kolbenpumpe 2, die am Gehäuse 3 der Antriebsvorrichtung 1 angeflanscht ist. Der Kolben 4 der Kolbenpumpe 2 ist an eine Pleuelstange 5 angelenkt, die mit ihrem anderen Ende an einem Zapfen 6 angelenkt ist, der auf einer Exzenterscheibe 7 befestigt ist, die ihrerseits auf einer Abtriebswelle 8 der Antriebsvorrichtung 1 befestigt ist. Die Abtriebswelle 8 treibt die drehfest mit dieser verbundene Exzenterscheibe 7, so daß der Kolben 4 der Kolbenpumpe 2 eine Bewegung zwischen den in Fig.2 dargestellten Stellungen des Anschlußpunktes 9 und 9' ausführt, die gleichzeitig die Totpunktlagen, d.h. die Umkehrpunkte der Bewegungsrichtung der Kolbenstange 4 darstellen.

Die Kolbenpumpe 2 taucht mit ihrem Ende 10 in ein nicht weiter dargestelltes Vorratsgefäß für das zu verspritzende Material ein. Aufgrund der Bewegungen des Kolbens 4 der Kolbenpumpe 2 wird das Material mit Druck aus der Auslauföffnung 11 herausgefördert. An dieser Öffnung ist in bekannter Weise ein Druckschlauch angeschlossen, der zu einer Spritzpistole führt. Des weiteren ist die Kolbenpumpe 2 vorteilhaft als eine an sich bekannte Differentialkolbenpumpe ausgebildet.

Zum Antrieb der Kolbenpumpe 2 dient ein Motor 12, der an einem Flansch 13 des Gehäuses 3 festgeschraubt ist. Vorteilhaft wird hier ein Elektromotor verwendet. Die Welle 14 des Motors 12 ist drehfest mit der Antriebswelle 15 der Antriebsvorrichtung 1 gekoppelt. Drehfest mit der Antriebswelle 15 ist ein Zahnrad 16 verbunden, das mit einem weiteren Zahnrad 17 kämmt, das drehfest mit einer Welle 18 verbunden ist.

Das eine Ende der Welle 18 ist über ein Lager 19 im Gehäuse 1 gelagert, während das gegenüberliegende Ende der Welle 18 über ein Lager 20 in einem Aufnahmestück 21 gelagert ist, das drehfest mit der Abtriebswelle 8 verbunden ist. Die Abtriebswelle 8 ist über Lager 22 im Gehäuse 3 gelagert.

Mit der Welle 18 ist ein zweites Zahnrad 23 drehfest verbunden, mit dem zwei Zahnräder 24, 25 kämmen, die andererseits in eine Innenverzahnung 26 des Aufnahmestückes 21 eingreifen. Jedes der beiden Zahnräder 24, 25 weist eine drehbar gelagerte Achse 27 auf, deren jeweils anderes Ende in ein Zahnrad 28 eingreift. Dieses Zahnrad 28 wiederum kämmt mit einem Zahnrad 29, das drehfest auf einer Abtriebswelle 30 befestigt ist.

Diese Abtriebswelle 30 treibt eine Hydraulikpumpe 31, die am Gehäuse 3 der Antriebsvorrichtung angeflanscht ist. Über eine Ansaugleitung 32 wird Hydrauliköl aus einem Tank 33 angesaugt und über eine Leitung 34, in die ein Drosselventil 35 eingeschaltet ist, und einen Wärmetauscher 36 in den Tank 33 zurückgeführt. An einem Manometer 37 ist der eingestellte Druck ablesbar. Parallel zur Leitung 34 ist eine Leitung 38 geschaltet, in die ein Sicherheitsventil 39 eingesetzt ist, das den Öldruck auf einen maximalen Druck begrenzt.

Die Vorrichtung arbeitet wie folgt. Die vom Motor 12 angetriebene Antriebswelle 15 treibt das Zahnrad 17 und damit die Welle 18 an. Gleichzeitig werden über das Zahnrad 23 die beiden Zahnräder 24, 25 angetrieben, die in die Innenverzahnung 26 des Aufnahmestücks 21 eingreifen. Diese Zahnräder 24, 25 treiben das Aufnahmestück 21 und damit die Abtriebswelle 8 an, auf der die Exzenterscheibe 7 angeordnet ist. Über die Pleuelstange 5 wird der Kolben 4 der Kolbenpumpe 2 entsprechend der Drehzahl der Abtriebswelle 8 angetrieben. Wird über die Spritzpistole kein Material mehr abgeführt, so erhöht sich der Druck in der Kolbenpumpe 2, was zur Folge hat, daß der Widerstand der vom Kolben 4 auf die Abtriebswelle 8 ausgeübten Kraft so groß wird, das die Abtriebswelle 8 stehen bleibt und damit auch das Aufnahmestück 21. Die Welle 18 wird jedoch weiterhin vom Motor 12 angetrieben. Über die beiden Zahnräder 24, 25, die die Ausgleichszahnräder bilden, wird nunmehr ausschließlich das Zahnrad 28 angetrieben, das über das Zahnrad 29 die Abtriebswelle 30 und damit die Hydraulikpumpe 31 antreibt. In dem Moment, wo wieder Material verspritzt wird, mindert sich der von der Kolbenstange über den Exzenter auf die Abtriebswelle 8 ausgeübte Kraft, so daß nunmehr das Aufnahmestück 21 von den Ausgleichszahnrädern 24, 25 angetrieben wird. Des weiteren wird auch die Hydraulikpumpe 31 über die zweite Abtriebswelle 30 angetrieben. Betrachtet man Fig. 2, so leistet die Kolbenpumpe 2 die größte Arbeit zwischen den beiden Stellungen 9 und 9' ihres Kolbens 4. In den Totpunkten 9 und 9' wird hingegen keine Arbeit geleistet, da hier der Kolben seine Bewegungsrichtung umkehrt. Die Kraft, die von der Kolbenstange auf die Exzenterscheibe und damit auf die Abtriebswelle 8 ausgeübt wird, nimmt in der Nähe der Totpunkte auf den jeweiligen Totpunkt hin sehr rasch ab. Durch diese verminderte Gegenkraft wird aufgrund des Differentialgetriebes die Abtriebswelle 8 schneller angetrieben, so daß der Bereich der Kolbenpumpe, in der wenig oder nichts gefördert wird, wesentlich rascher überschritten wird als dies bei einem Getriebe mit konstanter Drehzahl der Abtriebswelle der Fall ist. Hierdurch wird die Umsteuerzeit der Kolbenpumpe und damit die Zeit, in der diese die von der Spritzpistole angeforderte Menge nicht ohne Druckverlust nachliefern kann, so stark reduziert, daß im Spritzbild dieser Umsteuervorgang kaum noch in Erscheinung tritt und somit ein gleichmäßiges Spritzbild erhalten wird.

Als Motor kann ein Elektromotor, z.B. ein Drehstrommotor, oder aber auch ein benzin-oder dieselgetriebener Motor eingesetzt werden. Des weiteren ist es auch möglich, einen Druckluftrotationsmotor einzusetzen. Ein erfindungsgemäßer Antrieb ist des weiteren auch nicht auf Kolbenpumpen beschränkt, sondern kann auch bei anderen Pumpentypen mit gleichem Vorteil eingesetzt werden. In jedem Fall gestattet eine erfindungsgemäße Vorrichtung, Motoren zu verwenden, die auch dann weiterlaufen können, wenn an der Spritzpistole kein Material abgenommen wird.

## Ansprüche

1. Vorrichtung für den Antrieb von Pumpen mit einem konstant anstehenden und vorwählbaren Betriebsdruck, dadurch gekennzeichnet, daß die Vorrichtung (1) ein Differentialgetriebe mit einer Antriebswelle (15) für den Anschluß eines Motors (12) und zwei Abtriebswellen (8) für den Anschluß der Pumpen (2) und einer einstellbaren Bremsvorrichtung aufweist.

2. Vorrichtung nach Anspruch 1, dadurch gekennzeichnet, daß die Bremseinrichtung aus einer Hydraulikpumpe (31) und einem einstellbaren Drosselventil (35) besteht.

3. Vorrichtung nach Anspruch 2, dadurch gekennzeichnet, daß in den Hydraulikkreislauf ein Wärmetauscher (36) eingeschaltet ist.

4. Vorrichtung nach Anspruch 1, dadurch gekennzeichnet, daß die Bremseinrichtung aus einer Wirbelstrombremse besteht.

5. Vorrichtung nach Anspruch 1, dadurch gekennzeichnet, daß die Bremseinrichtung aus einer mechanischen Bremse besteht.

6. Vorrichtung nach einem der Ansprüche 1 bis 5, dadurch gekennzeichnet, daß der Antriebsmotor ein Elektro-, Verbrennungs-oder Druckluftrotationsmotor ist.

7. Vorrichtung nach einem der Ansprüche 1 bis 6, dadurch gekennzeichnet, daß bei Verwendung einer Kolbenpumpe (2) die Drehbewegung der Abtriebswelle (8) über eine Exzenterscheibe (7) und eine Pleuelstange (5) auf die Kolbenpumpe (2) übertragen wird.

8. Vorrichtung nach einem der Ansprüche 1 bis 7, dadurch gekennzeichnet, daß die Vorrichtung ein Gehäuse (3) aufweist, das ein Differentialgetriebe aufnimmt, daß an dem Gehäuse (3) der Antriebsmotor (12), die Bremseinrichtung (31) und die Pumpe (2) befestigt sind, daß sowohl auf der zum Motor (12) wie zur Bremseinheit (31) führenden Welle (15, 30) je ein Zahnrad (16, 29) drehfest befestigt ist, daß das auf der zum Motor (12) führenden Welle (15) angeordnete Zahnrad (16) mit einem drehfest auf einer im Gehäuse (3) gelagerten Welle (18) befestigten Zahnrad (17) kämmt, daß ein Ende der Welle (18) unmittelbar im Gehäuse (3) und das andere Ende drehbar in einem Aufnahmestück (21) der zur Pumpe (2) führenden Abtriebswelle (8) gelagert ist, daß das Aufnahmestück (21) mit einer Innenverzahnung (26) versehen ist, in die zwei Zahnräder (24, 25) eingreifen, die gleichfalls in ein mit der Welle (18) drehfest verbundenes Zahnrad (23) eingreifen, daß in jedem der Zahnräder (24, 25) drehbar eine Achse (27) gelagert ist, die je in ein Zahnrad (28) eingreifen, das um die Welle (18) drehbar gelagert ist und daß das Zahnrad (28) mit einem auf der zur Bremseinrichtung führenden Abtriebswelle (30) drehfest angeordneten Zahnrad (29) kämmt.

Fig.1

Fig. 2  (Ansicht X )

Fig. 3  (Schnitt A-B)

| | Europäisches Patentamt | EUROPÄISCHER RECHERCHENBERICHT | | |
|---|---|---|---|---|

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-1 802 456 (METAALBEDRIJF RADEMAKERS) * Seite 5, Absatz 3 - Seite 8, Absatz 3 * | 1,4,6 | F 04 B 9/02 B 05 B 9/04 F 16 H 3/72 |
| Y | | 2,3,5, 7,8 | |
| | --- | | |
| X | FR-A-2 218 791 (PLACE) * Insgesamt * | 1,4,6 | |
| Y | | 2,3 | |
| A | | 5 | |
| | --- | | RECHERCHIERTE SACHGEBIETE (Int. Cl.4) |
| Y | AU-B- 26 933 (MILIVOJEV)(1977) * Seite 3, Zeile 13 - Seite 5, Zeile 2 * | 2,3 | F 04 B B 05 B F 16 H |
| A | | 1,6 | |
| | --- | | |
| Y | DE-A-1 750 527 (HARVEY) * Seite 4, Zeile 1 - Seite 9, Absatz 3 * | 2,3 | |
| A | | 1,6 | |
| | --- -/- | | |

Der vorliegende Recherchenbericht wurde für alle Patentansprüche erstellt.

| Recherchenort DEN HAAG | Abschlußdatum der Recherche 26-01-1987 | Prüfer VON ARX H.P. |
|---|---|---|

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | FR-A-1 018 963 (EHL)<br>* Insgesamt * | 5,8 | |
| A | | 1,2,6 | |
| | --- | | |
| Y | US-A-4 009 971 (KROHN & CULBERTSON)<br>* Spalte 3, Zeilen 43-61 * | 7 | |
| A | | 1 | |
| | --- | | |
| A | US-A-2 543 878 (STEWART)<br>* Spalte 2, Zeile 25 - Spalte 3, Zeile 27 * | 1,8 | |
| | --- | | |
| A | GB-A-2 125 946 (CHILD) | 1,2 | RECHERCHIERTE SACHGEBIETE (Int. Cl.4) |
| | ----- | | |

Der vorliegende Recherchenbericht wurde für alle Patentansprüche erstellt.

| Recherchenort | Abschlußdatum der Recherche | Prüfer |
|---|---|---|
| DEN HAAG | 26-01-1987 | VON ARX H.P. |